(19) Europäisches Patentamt
European Patent Office
Office européen des brevets

(11) Veröffentlichungsnummer: **0 347 540 A2**

(12) # EUROPÄISCHE PATENTANMELDUNG

(21) Anmeldenummer: **89106687.0**

(51) Int. Cl.4: **C08J 5/06 , C08L 63/00**

(22) Anmeldetag: **14.04.89**

(30) Priorität: **22.06.88 DE 3820971**

(43) Veröffentlichungstag der Anmeldung: **27.12.89 Patentblatt 89/52**

(84) Benannte Vertragsstaaten: **AT BE CH DE ES FR GB GR IT LI NL SE**

(71) Anmelder: **Degussa Aktiengesellschaft**
**Weissfrauenstrasse 9**
**D-6000 Frankfurt am Main 1(DE)**

(72) Erfinder: **Lechner, Ulrike, Dr.**
**Landgrafenring 33**
**D-6050 Offenbach(DE)**
Erfinder: **Feldsmann, Albrecht**
**Platterstrasse 162**
**D-6200 Wiesbaden(DE)**

(54) **Aramidfaser-verstärke Epoxidharze.**

(57) Die Erfindung betrifft mit Aramidfasern verstärkte Epoxidharze, bei denen die Haftung zwischen Fasern und Harz durch eine Vorbehandlung der Fasern mit Organosilanen verbessert wird.



Xerox Copy Centre

## Aramidfaser-verstärkte Epoxidharze

Die Erfindung betrifft Aramidfaser-verstärkte Epoxidharze, bei denen die Haftung zwischen Faser und Epoxidharz verbessert wird. .

Bei Faserverbundwerkstoffen bildet die Haftung in der Grenzfläche zwischen Faser und Matrix ein Hauptproblem, weil dadurch die mechanischen Eigenschaften von Faserverbundbauteilen deutlich beeinflußt werden. Die Grenzfläche muß sowohl alle Kräfte von außen aufnehmen und übertragen als auch die Kräfte von innen, die durch unterschiedliche thermische Ausdehnungskoeffizienten und durch Härtungsschwund hervorgerufen werden. Zur Verbesserung der Haftungsqualität und der mechanischen Eigenschaften zwischen Faseroberfläche und Harz werden zum Beispiel bei Glasfasern häufig Haftvermittler eingesetzt.
Zur Verbesserung der Haftung von Aramidfasern sind bisher keine wirksamen Mittel bekannt geworden.

Aufgabe der Erfindung sind Aramidfaser-verstärkte Epoxidharze, bei denen die Haftung zwischen Faser und Epoxidharz verbessert wird.

Gegenstand der Erfindung sind Aramidfaser-verstärkte Epoxidharze,die dadurch gekennzeichnet sind, daß die Aramidfasern an der Oberfläche mit einem Organosilan der allgemeinen Formel
$R^1\text{-}(CH_2)_n\text{-}Si(OR)$ (I)oder
$S_x[(CH_2)_n\text{-}Si(OR)_3]_2$ (II)
behandelt wurden, in denen $R^1$ Halogen oder einen organischen Rest darstellt, ausgewählt aus der Gruppe bestehend aus Alkyl, Alkenyl, Amino, Mercapto, Acetoxy, Epoxy, Methacryloxy, N′-Acyl-Harnstoff, der an das Siliciumatom durch eine Alkylkette mit 2 bis 6 Kohlenstoffatomen (n=2 bis 6) gebunden ist, R einen Alkylrest mit 1 bis 4 Kohlenstoffatomen darstellt, insbesondere Methyl oder Ethyl, und x einer Zahl von bis 6, bevorzugt 1 bis 4, entspricht.
R′ bedeutet bevorzugt als:
Halogen: Chlor,
Alkyl: Methyl oder Ethyl mit n = 2,
Alkenyl: Vinylen, 2-Propenyl, Cyclohexenyl
N′-Acyl-Harnstoff:

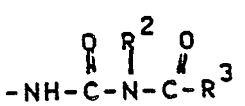

mit $R^2$: Alkyl $C_1$-$C_6$, geradkettig oder verzweigt
$R^3$ : Wasserstoff, Alkyl $C_1$-$C_6$, geradkettig oder verzweigt
(2′ methoxy)ethyl, Aryl, insbesondere Phenyl,
oder

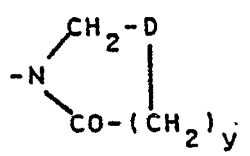

mit y = 1 oder 2 oder 3 und D: $-CH_2-$, $NR^2$,
Verbindungen wie sie gemäß der DE-OS 35 24 215.9 herstellbar sind.
Bevorzugt eingesetzte schwefelfunktionelle Organosilane gemäß Formel (11) sind vor allem Verbindungen mit x = 1 bis 4 und n = 3, insbesondere
$(CH_3O)_3\ Si\text{-}(CH_2)_3 - S - (CH_2)_3\text{-}Si\ (OCH_3)_3$

Als Epoxyharze bezeichnet man höhermolekulare Stoffe, die im Durchschnitt mehr als einen Epoxidrest je Molekül enthalten. Diese funktionelle Gruppe wird mit reaktiven Wasserstoffatomen anderer Verbindungen wie zum Beispiel mehrwertigen Alkohole, mehrbasigen Säuren bzw. Säureanhydride oder polyfunktionellen Amine umgesetzt. Epoxidgruppenhaltige Harze reagieren mit den oben genannten Verbindungen in Polyadditionsreaktionen.
Man erhält dann vernetzte, unschmelzbare Produkte, sogenannte Duroplaste.
Die Reaktionen der Epoxidharze sind jedoch nicht auf Additionen am Oxiranring beschränkt. Die Harze

können ebenso ringöffnend polymerisieren oder zum Beispiel mit Fettsäuren verestert werden.

Die Anlagerung von H-aktiven Verbindungen, wie zum Beispiel einem Amin, verläuft unter Ausbildung von Hydroxyaminen. Das verwendete Harzsystem L 20 und SL besteht aus einem niedrigviskosen, vollreaktiven Bisphenol A-Harz und einem aliphatischen Diamin-Härter und ist zur Herstellung von hochbelasteten Verbundbauteilen sehr gut geeignet. In Verbindung mit den Härtern der SL Reihe kann das Harz in Bezug auf Topfzeit und Viskosität nach Wunsch angepaßt werden.

Gegenstand der Erfindung ist ebenfalls ein Verfahren zur Oberflächenbehandlung von Aramidfasern, das dadurch gekennzeichnet ist, daß man das Aramidfasergewebe bei 5 bis 40°C, insbesondere 20 bis 25 °C in ein organisches Lösungsmittel eintaucht, das 0,01 bis 10, bevorzugt 0,01 bis 1 Gew.-% eines Organosilans gemäß Formel (I) oder (II); bezogen auf die Gesamtmenge der Lösung, enthält

Als Lösungsmittel geeignet sind polare Verbindungen wie zum Beispiel Wasser oder Alkohole, insbesondere Methanol, Äthanol, Petroläther, Isopropanol, Kristallöle, Benzin.

Nach einer Tränkzeit von 1 bis 120 min läßt man das Gewebe im allgemeinen bei Raumtemperatur oder erhöhten Temperaturen bis 70 °C vortrocknen und schließt dann eine Behandlung bei 60 bis 120 °C an, die vorteilhaft 0,1 bis 15 h dauert.

Gegenstand der Erfindung sind ebenso die auf diesem Wege gewonnenen Aramidfasern, die einen Organosilangehalt von 0,01 bis 10, insbesondere 0,01 bis 1,0 Gew.-% aufweisen, bezogen auf die behandelte Faser.

Der Gewichtsanteil der Fasern in dem verstärkten Epoxidharz beläuft sich auf 40 bis 60 %, bevorzugt 50 bis 51 Gew.-%.

Überraschenderweise wurde gefunden, daß die Vorbehandlung von Aramidfasern mit Organosilanen eine Verbesserung der Haftung in Epoxidharzen zur Folge hat. Dies zeigte sich im Verlauf von Biege- und Trommelschälversuchen, sowohl bei vorhergehender Trocken- als auch bei Naßlagerung.

Dies war nicht vorherzusehen, da im Gegensatz zu Glasfasern, deren Haftung in Kunststoffen schon seit langem mit Organosilanen verbessert wird, Aramidfasern aufgrund ihrer chemischen Zusammensetzung keine OH-funktionelle Feststoffoberfläche aufweisen, und somit auch keine Siloxanbindung zwischen Faser und Organosilan entstehen sollte.

Eingesetzte Materialien:

Aramidfasergewebe (Firma Interglas/Ulm)

(Tabelle 1)

| | |
|---|---|
| Qualität | 98610 |
| Gewicht(g/m) +/- 5% | 170 |
| Fadenzahl / cm | 20x20 |
| Kettmaterial tex | 42 |
| Schußmaterial tex | 42 |
| Dicke (mm) DIN 53855 | 0,35 |
| Bindung | Atlas 1/7 |

(Tabelle 2)

| Harz L 20 Eigenschaften | Einheit | Wert |
|---|---|---|
| Dichte 20°C<br>Viskosität 25°C<br>Epoxidäquivalent | $g/cm^3$<br>mPa x sec<br>g/Äquiv. | 1,15 +/- 0,01<br>900 +/- 150<br>179 +/- 4 |
| **Härter SL Eigenschaften** | **Einheit** | **Wert** |
| Dichte 20°C<br>Viskosität 25°C<br>Aminäquivalent<br>Mischungsverhältnis auf 100 GT L 20 | $g/cm^3$<br>mPa x sec<br>g/Äquiv.<br>GT | 0,95 +/- 0,02<br>85 +/- 10<br>60<br>34 |

Verwendete Organosilane:

Tabelle 3

| Code | Strukturformel |
|---|---|
| $A_{1/2*}$ | $(CH_3O)_3 - Si - CH_2 - CH_2 - CH_3$ |
| B | $(CH_3O)_3 - Si - CH_2 - CH_2 - CH = CH_2$ |
| C | 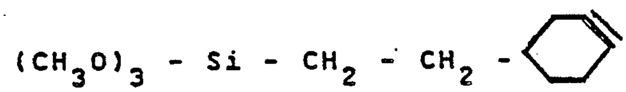 |
| D | $(CH_3O)_3 - Si - CH_2 - CH_2 - CH_2 - Cl$ |
| E | 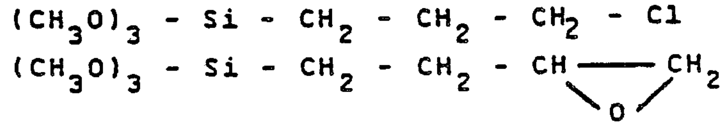 |
| F | 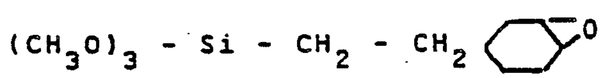 |
| G | $(CH_3O)_3-Si-CH_2-CH_2-NH-CO-N-CO-(CH_2)_5$ |
| H | $((CH_3O)_3 - Si - CH_2 - CH_2 - CH_2)_2 - S$ |
| $I_{1/2}{}^*$ | $(CH_3-CH_2O)_3 - Si - CH_2 - CH_2 - CH_2 - NH_2$ |

Indizes 1: Lösungsmittel: Petroläther
2: Lösungsmittel: Wasser
keine Angabe: Lösungsmittel Petroläther

Versuchsdurchführung

Auftragen der Silane

Die unbehandelten Gewebe wurden auf die erforderlichen Maße, die von der Normprobengröße und Probenanzahl abhängen, mit einer Spezialschere zurechtgeschnitten. Hierbei wurde darauf geachtet, daß die langgestreckten Fäden an der Oberfläche des Gewebes in Probekörperlängsrichtung verliefen.
Anschließend wurde eine 0,5 %ige Silanlösung in Wasser oder Petroläther hergestellt. Danach folgten 30 min. Tränkzeit in der Lösung mit Trocknungszeiten von 60 min. bei einer Raumtemperatur von 22°C und 63% rel. Feuchte, sowie 120 min. in einem Wärmeumluftofen bei 120°C. Während der ersten Trocknungsphase wurden die silanisierten Gewebe auf ein Fließpapier gelegt.

Probekörper

Die Festigkeitsprüfung umfaßte Probekörper, die

a) bei Raumtemperatur bei 22°C und 63% rel. Feuchte gelagert wurden (Trockenlagerung) und

b) Probekörper, die 2 h bei 100°C in Aqua dest. gekocht wurden (Naßlagerung). Diese naßgelagerten Probekörper wurden vor der Prüfung auf Fließpapier getrocknet, auf Raumtemperatur abgekühlt und unmittelbar anschließend geprüft.

Das Epoxidharz und der Härter wurdenin einem Mischungsverhältnis von 100 : 34 (Gewichtsteile) angesetzt. Der Gewichtsanteil der Fasern in dem verstärkten Harz belief sich auf 50,5 Gew.-%.

Trommelschälversuch (Nach DIN 53295)

Die Abmessungen der Prüfplatten beliefen sich auf 280 x 230 x 2 (mm). Aus der Prüfplatte ließen sich 4 Probekörper schneiden, die bei Raumtemperatur gelagert wurden. Die Laminate härteten in einer Presse unter folgenden Bedingungen aus:
Vorhärtung: 70°C /2 h
Temperung : 120°C/8 h

Für die gleichmäßige Laminatdichte von 2 mm sorgte beim Pressen ein Distanzbereich.

Da bei dem Schälversuch das Laminat durch die Walze eine Biegebeanspruchung erfährt, wurde es zur Versteifung mit dem Harz - Härtersystem L 20 VE 2778 auf eine 8 mm starke Aluminiumplatte geklebt und bei folgenden Bedinungen ausgehärtet:
Vorhärtung: 25°C /3 h
Temperung : 60°C /15 h

Die Aluminiumbleche wurden vorher auf 30°C aufgewärmt, um später beim Temperzyklus auftretende Spannungen in der Klebfläche zu vermeiden. Diese unerwünschten Spannungen werden durch die unterschiedlichen Wärmeausdehnungskoeffizienten von dem Aluminium und dem Harzsystem verursacht.

Tabelle 4

| Durch Trommelschälversuch ermitteltes Schälmoment (M) (nach Trockenlagerung) | | |
|---|---|---|
| Silan | Schälmoment M (N * mm/mm) | Verbesserung (%) |
| O | 133,8 | |
| $A_1$ | 159,6 | 19,2 |
| B | 177,6 | 32,7 |
| C | 185,4 | 38,5 |
| D | 177,6 | 32,7 |
| E | 140,4 | 4,9 |
| F | 156,6 | 17,0 |
| $I_2$ | 138,0 | 3,2 |

Biegeversuch (nach DIN 53 542)

Der Normprobenkörper hat die Abmaße 80 x 10 x 4 (mm). Daraus ergaben sich unter Berücksichtigung der Probekörperanzahl, des Randbeschnitts und der Schnittspalte für die Prüfplatte die Abmessungen 180 x 150 x 4 (mm). Die Prüfplatte enthielt dabei jeweils 6 Probekörper für eine Trockenlagerung und für eine Naßlagerung. Der Versuchsablauf entsprach der DIN 53452 und wurde bei Raumtemperatur von 22°C und 63% rel. Feuchte durchgeführt. Aus den Prüfplatten wurden die Probekörper herausgeschnitten. Alle Schnittflächen wiesen eine riefenfreie Oberfläche auf.

Tabelle 5

| Meßwerte der Biegespannung | | | | |
|---|---|---|---|---|
| Silan | Trockenlagerung | | Naßlagerung | |
| | Biegespannung ($N/mm^2$) | Verbesserung (%) | Biegespannung ($N/mm^2$) | Verbesserung (%) |
| O | 364,5 | | 321,4 | |
| $A_1$ | 404,5 | 11,0 | 370,1 | 15,2 |
| $A_2$ | 370,1 | 1,5 | 337,8 | 5,1 |
| B | 387,6 | 6,3 | 358,2 | 11,4 |
| C | 407,7 | 11,9 | 382,9 | 19,1 |
| D | 397,7 | 9,1 | 383,7 | 19,4 |
| E | 351,3 | - 3,5 | 340,5 | 5,9 |
| F | 407,3 | 11,7 | 387,9 | 20,7 |
| G | 379,0 | 4,0 | 355,6 | 10,6 |
| H | 385,6 | 5,7 | 356,7 | 10,9 |
| $I_1$ | 362,4 | - 0,6 | 374,3 | 16,4 |
| $I_2$ | 401,7 | 10,2 | 373,1 | 16,1 |

Zugversuch (nach DIN 53455)

Die Prüfplatte enthielt jeweils 4 Probekörper für eine Trockenlagerung. Die Prüfplattengröße betrug 180 x 75 x 2 (mm). Aus den Prüfplatten wurden die Probekörper mit den Maßen 170 x 15 x 2 (mm) herausgetrennt. Ferner wurden die Verstärkungen aus glasfaserverstärktem Kunststoff (GFK) mit den Abmaßen 35 x 15 x 1 (mm) jeweils beidseitig am oberen und unteren Rand des Aramidlaminats aufgeklebt. (Harz -Härtersystem: L 20 VE2778 Aushärtung: 60°C/15 h). Damit ergab sich eine Prüflänge von 100 mm. Die

GFK-Verstärkungen wurden einseitig angefast, um eine gleichmäßigere Krafteinleitung zu gewährleisten. Siehe Abb. 18

| Silan | Zugkraft (N) | Zugspannung ($N/mm^2$) |
|---|---|---|
| O | 18000 | 488 |
| $A_2$ | 18600 | 534 |
| F | 18000 | 499 |
| G | 18300 | 527 |

Tabelle 6

Durch Zugversuch ermittelte Werte für Zugkraft und Zugspannung

**Ansprüche**

1. Mit Aramidfasern verstärkte Epoxidharze, dadurch gekennzeichnet, daß die Aramidfasern an der Oberfläche mit einem Organosilan der allgemeinen Formel

$R^1$-$(CH_2)_n$-$Si(OR)_3$ (I) oder

$S_x$ $\{(CH_2)_nSi(OR)_3\}_2$ (II)

behandelt wurden, in denen $R^1$ Halogen oder einen organischen Rest darstellt, ausgewählt aus der Gruppe bestehend aus Alkyl, Alkenyl, Amino, Mercapto, Acetoxy,Epoxy, Methacryloxy und N'- Acyl-Harnstoff, der an das Stickstoffatom durch eine Alkylkette mit 2 bis 6 Kohlenstoffatomen (n = 2 bis 6) gebunden ist, R einen Alkylrest mit 1 bis 4 Kohlenstoffatomen darstellt, und x eine Zahl von 1 bis 6 bedeutet.

2. Aramidfasern zur Verstärkung von Epoxidharzen, dadurch gekennzeichnet, daß sie mit einem Organosilan gemäß den allgemeinen Formeln (I) oder (II) behandelt wurden und einen Organosilangehalt von0,01 bis 10 Gew.-% aufweisen, bezogen auf die Fasern.